# EUROPÄISCHE PATENTSCHRIFT

(11) **EP 1 679 150 B1**
(45) Veröffentlichungstag und Bekanntmachung des Hinweises auf die Patenterteilung: **17.08.2011**
(21) Anmeldenummer: 05100041.2
(22) Anmeldetag: 05.01.2005
(51) Int. Cl.: B23Q 1/62, B23B 41/00, B23Q 3/00

(54) **Vorrichtung zum Anbringen von Bohrungen in insbesondere lang gestreckte Werkstücke**
Device for drilling holes in elongated work pieces
Dispositif pour le perçage des pièces allongées

(43) Veröffentlichungstag der Anmeldung: 12.07.2006
(73) Patentinhaber: Creametal AG, 3011 Bern (CH)
(72) Erfinder: Zimmermann, Thomas, 3095 Spiegel b. Bern (CH); Stiefenhofer, Rolf, 3145 Niederscherli (CH)
(74) Vertreter: Scheuzger, Beat Otto

(56) Entgegenhaltungen:
- WO-A-01/69337
- DE-U1- 9 315 813
- FR-A- 2 446 147

## Beschreibung

Die vorliegende Erfindung bezieht sich auf eine Vorrichtung zum Anbringen von Bohrungen in insbesondere lang gestreckte Werkstücke, umfassend eine Bohreinrichtung, in welcher ein Bohrwerkzeug einspannbar ist, welche Bohreinrichtung an einem Ständer über erste Führungen derart angebracht ist, dass diese parallel zur Achse des Bohrwerkzeugs verfahrbar ist, sowie eine Werkstückauflage, auf welcher das lang gestreckte Werkstück aufsetzbar ist, und auf welcher das lang gestreckte Werkstück bezüglich der Bohreinrichtung positionierbar ist, und der Ständer, an welchem die Bohreinrichtung angebracht ist, entlang von zweiten Führungen rechtwinklig zu den ersten Führungen und quer zum aufsetzbaren Werkstück verfahrbar ist, welche zweiten Führungen auf einem Wagen befestigt sind, welcher entlang von dritten Führungen, die senkrecht zu den ersten Führungen und zu den zweiten Führungen ausgerichtet sind, und längs des aufsetzbaren lang gestreckten Werkstücks verfahrbar ist (siehe z.ß. WO01/69337).

Auf dem Gebiet des Metallbaus müssen vielfach in lang gestreckten Einzelbauteilen einzelne Bohrungen angebracht werden. Das Anbringen dieser Bohrungen erfolgt üblicherweise in Ständerbohrmaschinen, die auch in kleineren Metallbaubetrieben anzutreffen sind. An diesen lang gestreckten Werkstücken werden von Hand Markierungen angebracht, welche Markierungen die Position kennzeichnen, in welcher die entsprechende Bohrung anzubringen ist. Danach wird dieses lang gestreckte Werkstück in den Bereich der Ständerbohrmaschine gebracht, da deren Auflage relativ schmal ist, müssen beidseitig von dieser Ständerbohrmaschine Stützrollen angeordnet werden, damit das lang gestreckte Werkstück auf der Auflage der Ständerbohrmaschine nicht abkippt. Das lang gestreckte Werkstück wird dann bezüglich des Bohrers in der Ständerbohrmaschine durch hin- und herschieben in die richtige Position gebracht.

Selbstverständlich wäre es denkbar, dass zum Bearbeiten und insbesondere zum Anbringen von Bohrungen in lang gestreckten Werkstücken CNC-gesteuerte Bearbeitungszentren eingesetzt werden könnten. Die Anschaffung eines derartigen Bearbeitungszentrums, mit welchem diese lang gestreckten Werkstücke in ihrer gesamten Länge bearbeitet werden könnte, wäre mit ausserordentlich grossen Investitionen verbunden, die sich für einen Kleinbetrieb nicht lohnen, da ein derartiges Bearbeitungszentrum nicht ausgelastet wäre.

Die Aufgabe der vorliegenden Erfindung besteht nun darin, eine Vorrichtung zum Anbringen von Bohrungen in insbesondere lang gestreckten Werkstücken zu schaffen, die kostengünstig herstellbar ist und die einen einfachen Bearbeitungsgang ermöglicht.

Erfindungsgemäss erfolgt die Lösung dieser Aufgabe dadurch, dass die dritten Führungen aus zwei Profilstücken gebildet sind, die an einem Rahmen befestigt sind, in welchen Auflageelemente eingesetzt sind, auf welche das lang gestreckte Werkstück aufsetzbar ist, und dass zwischen die beiden Profilstücke Stäbe einsetzbar sind, so dass die Stäbe entlang der beiden Profilstücke unterhalb der Auflageelemente verschiebbar sind, und dass an diesen Stäben Spannelemente angebracht sind, die längs der Stäbe verschiebbar und positionierbar sind.

Dadurch wird eine Vorrichtung geschaffen, die sehr einfach ist im Aufbau und kostengünstig hergestellt werden kann, und welche eine einfache Handhabung ermöglicht.

In vorteilhafter Weise ist der Rahmen rechteckförmig aus Längsholmen und Querholmen gebildet, wobei an den Längsholmen zusätzliche Profile angebracht sind, entlang welcher die Auflageelemente in beliebige Positionen verschiebbar sind. Durch die Möglichkeit des Verschiebens der Auflageelemente können diese bezüglich des zu bearbeitenden lang gestreckten Werkstücks in optimale Positionen gebracht werden, so dass das Werkstück für die Bearbeitung optimal abgestützt ist.

Einen besonders einfachen Aufbau erhält man dadurch, dass je eines der beiden Profilstücke längs eines Längsholms des Rahmens und parallel zum anderen angebracht ist, und jedes dieser Profilstücke mit mehreren in Längsrichtung verlaufenden Führungsnuten ausgestattet ist.

In vorteilhafter Weise ist der Wagen mit Führungsstücken ausgestattet, welche in Führungsnuten der Profilstücke für den Wagen hineinragen und gleitend geführt sind. Dadurch wird eine optimale und einfache Führung des Wagens erhalten.

Eine weitere vorteilhafte Ausgestaltung der Erfindung besteht darin, dass die Endbereiche der Stäbe mit Führungsstücken versehen sind, die jeweils in einer der Führungsnuten geführt sind, und die Stäbe entlang der Führungsnuten verschiebbar sind. Durch diese Anordnung können die Stäbe und die Spannelemente bezüglich des zu bearbeitenden Werkstücks in einfacher Weise positioniert und gespannt werden.

In vorteilhafter Weise ist jedes Spannelement mit einer Spannschraube ausgestattet, welche in einem Gewindestein eingeschraubt ist, welcher Gewindestein in einem auf der Stange verschiebbaren Ständer höhenverschiebbar gelagert ist, wobei an dem dem aufsetzbaren Werkstück zugewandten Ende drehbar ein Spannstück angebracht ist, dessen der Spannschraube abgewandte Fläche mit einer Längskerbe versehen ist, die im Querschnitt gesehen zwei verschieden lange Schenkel aufweist, die im Grund der Längskerbe einen rechten Winkel einschliessen. Mit dieser Ausgestaltung des Spannelementes ist es in optimaler Weise möglich, Werkstücke zu spannen, die unterschiedlichste Aussenkonturen aufweisen.

Eine weitere vorteilhafte Ausgestaltung der Erfindung besteht darin, dass am einen Endbereich des Rahmens und der Profilstücke ein Anschlagelement angebracht ist, das als Anschlag für das einsetzbare Werkstück dient, dass das eine Profilstück mit einer Messeinrichtung ausgestattet ist, welche mit einem am Wagen angebrachten Messfühler zusammenwirkt, und dass der Anschlag zugleich die Nullposition für das Bohrwerkzeug entlang der dritten Führungen bildet. Dadurch kann die Bohreinrichtung in optimaler Weise in die gewünschte Position bezüglich des zu bearbeitenden Werkstücks gebracht werden.

In vorteilhafter Weise sind entlang einer Führungsnut des einen Profilstückes Positionierelemente verschiebbar und in beliebiger Position arretierbar, welche mit einer Bohrung versehen sind, und ist am Wagen ein Positionierstift angebracht, der senkrecht zur Führungsnut verschiebbar ist und in passender Position in die Bohrung der Positionierelemente eindringt. Dadurch kann die Bohreinrichtung in einfacher Weise in vorgegebene Positionen gefahren und arretiert werden.

In gleicher Weise sind die zweiten Führungen mit einer Führungsnut ausgestattet, in welcher ebenfalls Positionierelemente verschiebbar und in beliebiger Position arretierbar sind, und die mit einer Bohrung versehen sind, und ist am Ständer ein Positionierstift angebracht, der senkrecht zur Führungsnut verschiebbar ist und in passender Position in die Bohrung der Positionierelemente eindringt.

In vorteilhafter Weise ist entlang des einen Profilstücks und parallel dazu am Rahmen ein vertikaler Steg angebracht, der als Queranschlag für das einsetzbare Werkstück dient, und sind die zweiten Führungen mit einer Messeinrichtung ausgestattet, welche mit einem am Ständer angebrachten Messfühler zusammenwirkt, wobei der Queranschlag zugleich die Nullposition für das Bohrwerkzeug entlang der zweiten Führung bildet. Dadurch lässt sich die Bohreinrichtung auch in Querrichtung zum lang gestreckten Werkstück in optimaler Weise in die gewünschte Position bringen.

Eine weitere vorteilhafte Ausgestaltung der Erfindung besteht darin, dass entlang einer Führungsnut des einen Profilstückes Niederhalteelemente verschiebbar und in eine beliebige Position bringbar sind, welche Niederhalteelemente aus einer vertikal angeordneten Stange gebildet sind, auf welche ein Bügel verschiebbar aufgesetzt ist, dessen Ende auf das aufsetzbare Werkstück auflegbar ist. Dadurch lässt sich in einfacher Weise vermeiden, dass das Werkstück von der Auflage beim Bearbeiten abgehoben werden kann.

In vorteilhafter Weise erfolgt die Verschiebung der Bohreinrichtung entlang den ersten Führungen, die Verschiebung des Ständers entlang den zweiten Führungen und die Verschiebung des Wagens entlang den dritten Führungen jeweils über einen handbetätigbaren Kurbeltrieb, wodurch sich ein einfaches Verschieben ergibt.

Eine Ausführungsform der erfindungsgemässen Vorrichtung wird nachfolgend anhand der beiliegenden Zeichnung beispielhaft näher erläutert.

Es zeigt:
Fig. 1 in räumlicher Darstellung einen Teil der erfindungsgemässen Vorrichtung;
Fig. 2 in räumlicher Darstellung die auf dem Ständer angeordnete Vorrichtung, welche auf dem Wagen angeordnet ist;
Fig. 3 eine Teilansicht auf die Bohreinrichtung mit Ständer und Wagen, wobei die dritten Führungen und der Rahmen im Schnitt dargestellt sind;
Fig. 4 eine Schnittdarstellung durch das eine Profilstück und Rahmen mit einem Positionierelement;
Fig. 5 eine Ansicht des Antriebs des Kurbeltriebs;
Fig. 6 in räumlicher Darstellung eine Messeinrichtung mit Messfühler und Positionierelement;
Fig. 7 in räumlicher Darstellung ein Spannelement;
Fig. 8 eine Schnittdarstellung durch ein Spannelement, mit welchem ein rundes Werkstück gespannt wird;
Fig. 9 eine Schnittdarstellung des Spannelementes, mit welchem ein rechteckförmiges Hohlprofil gespannt wird; und
Fig. 10 eine Schnittdarstellung des Spannelementes, mit welchem ein rechteckförmiges Flachprofil gespannt wird.

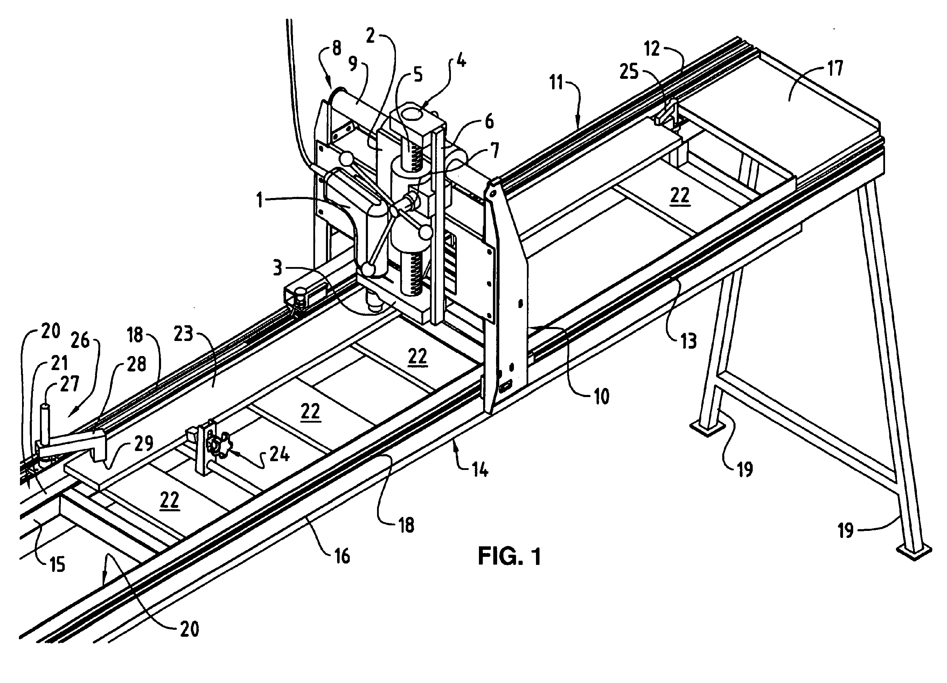

Wie aus Fig. 1 ersichtlich ist, ist im hier dargestellten Ausführungsbeispiel der erfindungsgemässen Vorrichtung eine Bohreinrichtung 1, die als Handbohrmaschine ausgebildet ist, an einer Tragvorrichtung 3 befestigt, welche über erste Führungen 4 mit einem Ständer 2 verbunden sind. Diese erste Führungen 4 umfassen eine mit einer Verzahnung versehenen Führungssäule 5 und eine Führungsleiste 6, wodurch die Bohreinrichtung 1 in bekannter Weise über die angebrachte Handkurbel 7 entlang einer Vertikalachse, die parallel zur Achse des nicht dargestellten Bohrwerkzeugs der Bohreinrichtung 1 ausgerichtet ist, verschiebbar ist, wodurch der Bohrvorgang ausgeführt werden kann.

Der Ständer 2 ist verschiebbar an zweiten Führungen 8 gelagert, welche rechtwinklig zu den ersten Führungen 4 ausgerichtet sind. Diese zweiten Führungen 8 bestehen ebenfalls in bekannter Weise wiederum aus einer weiteren Führungssäule 9 und einer nicht dargestellten Führungsleiste. Die Führungssäule 9 und die nicht dargestellte Führungsleiste sind auf einem Wagen 10 befestigt. Dieser Wagen 10 ist entlang von dritten Führungen 11 verschiebbar, welche dritten Führungen 11 senkrecht zu den ersten Führungen 4 und senkrecht zu den zweiten Führungen 8 ausgerichtet sind.

Die dritten Führungen 11 sind aus zwei Profilstücken 12 und 13 gebildet, die an einem Rahmen 14 befestigt sind. Dieser Rahmen 14 ist rechteckförmig ausgebildet und besteht aus zwei Längsholmen 15 und 16, die über Querholme 17 miteinander verbunden sind. Hierbei ist das eine Profilstück 12 am einen Längsholm 15 befestigt, während das andere Profilstück 13 am anderen Längsholm 16 befestigt ist, so dass die beiden Profilstücke 12 und 13 parallel zueinander ausgerichtet sind. Jedes dieser Profilstücke 12 und 13 weist Führungsnuten 18 auf, in welchen Führungsstücke, die am Wagen 10 angebracht sind, geführt sind, wie später noch im Detail beschrieben wird.

Der Rahmen 14 kann jeweils an seinen Endbereichen mit Füssen 19 versehen sein, so dass dieser quasi als Tisch ausgebildet ist. Die Füsse 19 können zusätzlich noch mit Rollen versehen sein, so dass dieser Tisch zusätzlich noch verschoben werden kann.

Entlang der beiden Längsholme 15 und 16 sind zusätzliche Profile 20 angeordnet, die mit einer Auflagefläche 21 versehen sind. Auf die Auflageflächen 21 dieser zusätzlichen Profile 20 können Auflageelemente 22 aufgelegt werden, die plattenförmig ausgebildet sind. Diese Auflageelemente 22 können entlang dieser zusätzlichen Profile 20 auf der Auflagefläche 21 verschoben werden und an beliebigen Stellen positioniert werden.

Auf diese Auflageelemente 22 ist ein lang gestrecktes Werkstück 23 aufsetzbar. Dieses lang gestreckte Werkstück 23 wird über Spannelemente 24 festgehalten. Das lang gestreckte Werkstück 23 wird mit seinem einen Endbereich an einem Anschlagelement 25, das am Rahmen 14 befestig ist, zur Anlage gebracht. Die eine Längsseite des lang gestreckten Werkstücks 23 kommt an einem der zusätzlichen Profile 20 zur Anlage und wird über die Spannelemente 24 gegen dieses verspannt.

Entlang des einen Profilstücks 12 ist in einer Führungsnut 18 ein Niederhalteelement 26 verschiebbar und in eine beliebige Position bringbar. Dieses Niederhalteelement 26 besteht aus einer vertikal angeordneten Stange 27, auf welcher ein Bügel 28 aufgesetzt ist, dessen Ende 29 auf das lang gestreckte Werkstück 23 auflegbar ist.

Die Bohreinrichtung 1 lässt sich nun durch Verschieben des Ständers 2 entlang der zweiten Führungen 8 und durch Verschieben des Wagens 10 entlang der dritten Führungen 11 bezüglich des zu bearbeitenden lang gestreckten Werkstücks 23 in Position fahren, die Bohrrichtung 1 kann dann entlang der ersten Führungen 4 abgesenkt werden, die Bohrung kann in das lang gestreckte Werkstück 23 an der entsprechenden Position angebracht werden.

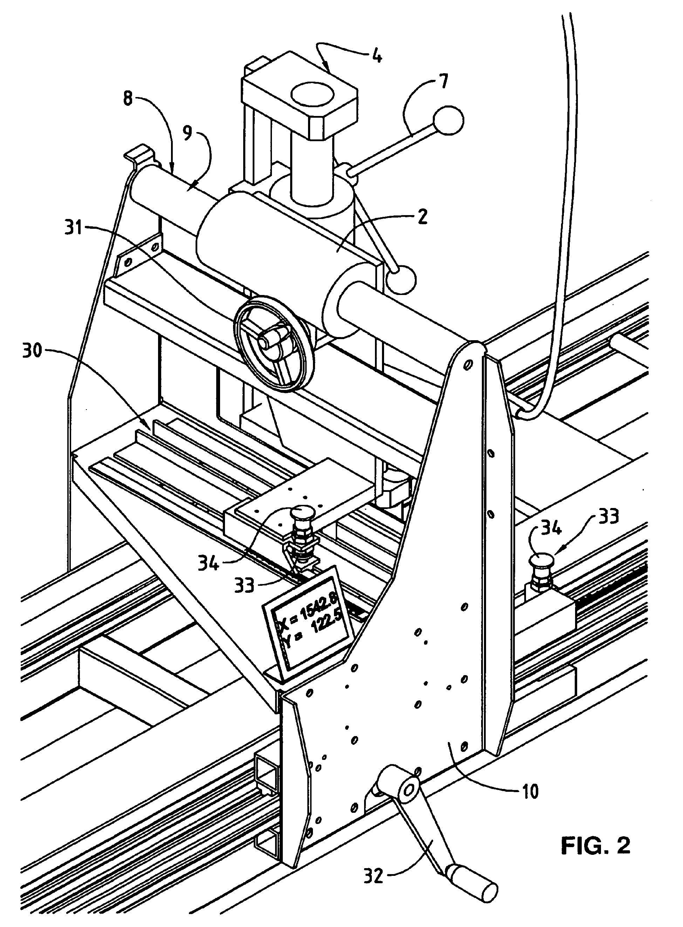

Aus Fig. 2 ist der Ständer 2 ersichtlich, der in bekannter Weise entlang der die zweiten Führungen 8 bildenden Säule 9 und der Führungsleiste 30 verfahren werden. In bekannter Weise ist die Säule 9 mit einem Zahnprofil versehen, so dass die Verschiebung des Ständers 2 ebenfalls über eine Handkurbel 31 erfolgen kann.

Der Wagen 10 ist ebenfalls mit einer Handkurbel 32 ausgestattet, die später noch im Detail beschrieben wird.

Sowohl am entlang der zweiten Führungen 8 verschiebbaren Ständer 2 als auch am entlang der dritten Führungen 11 verschiebbaren Wagen 10 sind Positionierelemente 33 vorgesehen, die verschiebbar sind und in beliebiger Position arretierbar sind, in welche ein am Ständer 2 bzw. am Wagen 10 angebrachter Positionierstift 34 eindringen kann. Der Aufbau dieser Positionierelemente 33 wird später noch im Detail beschrieben.

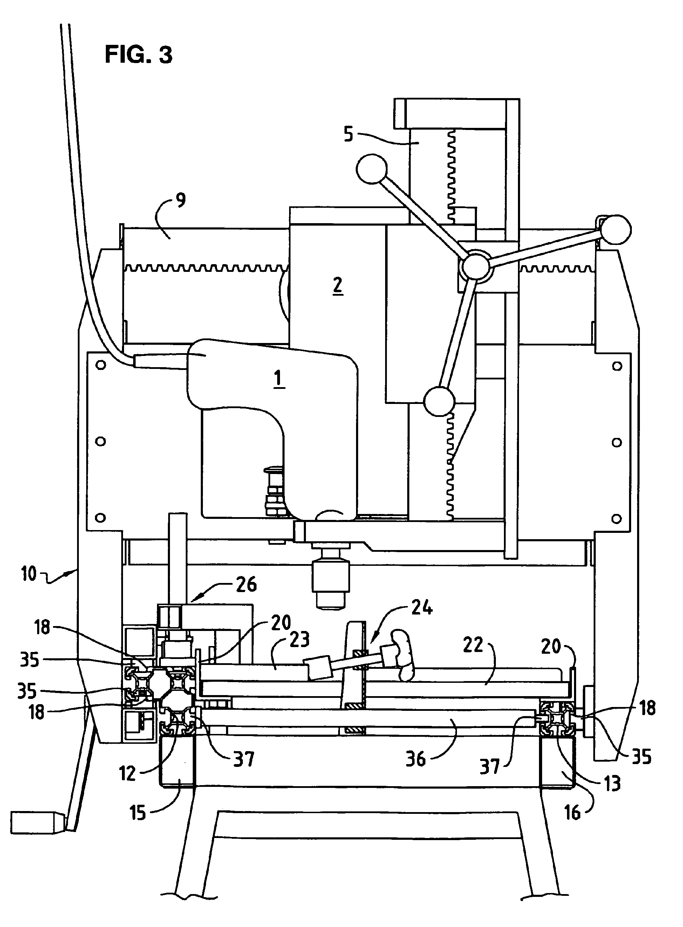

Aus Fig. 3 sind die beiden Längsholme 15 und 16 des Rahmens 14 ersichtlich. Auf diesen Längsholmen 15 und 16 sind die beiden Profilstücke 12 und 13 angebracht. Der Wagen 10 ist mit Führungsstücken 35 ausgestattet, die in Führungsnuten 18 der Profilstücke 12 und 13 hineinragen und gleitend geführt sind.

In dieser Fig. 3 ist ebenfalls ein Stab 36 dargestellt, der ebenfalls in Führungsnuten 18 der beiden Profilstücke 12 und 13 verschiebbar gelagert ist, und entlang welcher jeweils ein Spannelement 24 gegen das lang gestreckte Werkstück 23 hin und von diesem weg verschiebbar ist. Der Stab 36 ist beidseitig mit Führungsstücken 37 versehen, welche in den Führungsnuten 18 der Profilstücke 12 und 13 geführt sind.

Ebenfalls ersichtlich aus Fig. 3 sind die beiden zusätzlichen Profile 20, auf welchen die Auflageelemente 22 aufgelegt und in die gewünschte Position schiebbar sind.

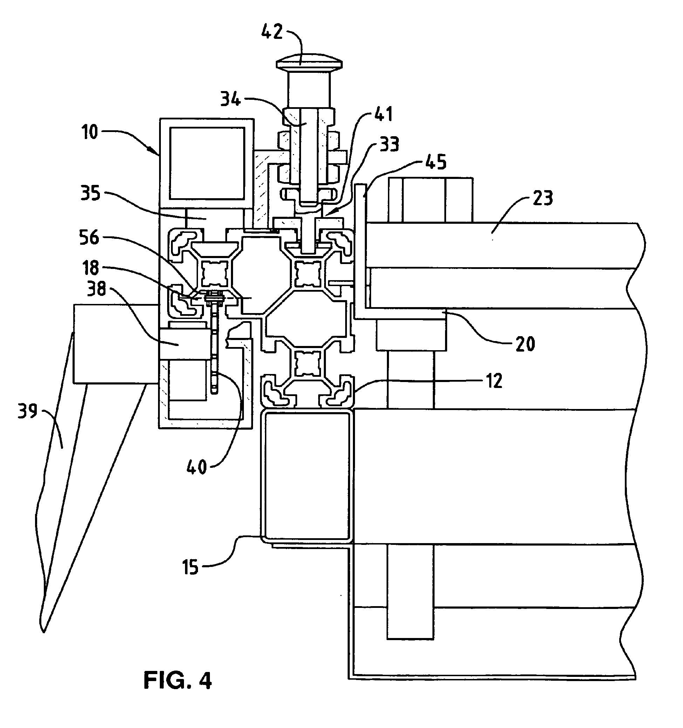

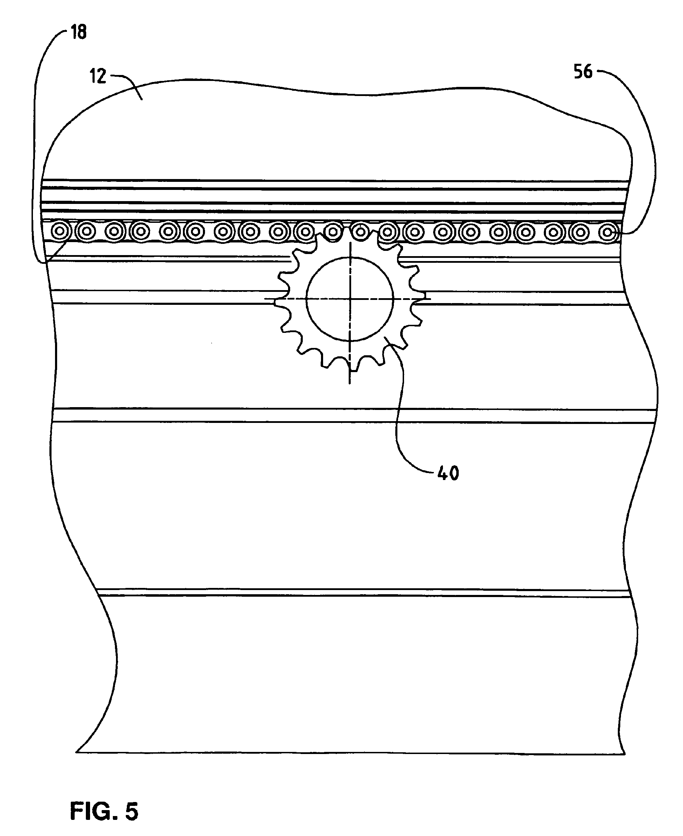

Wie aus den Fig. 4 und 5 ersichtlich ist, ist in eine Führungsnut 18 des einen Profilstückes 12 eine Kette 56 eingelegt und in bekannter Weise befestigt. Am Wagen 10 ist eine Achse 38 drehbar gelagert und aussenseitig mit einer Kurbel 39 ausgestattet, während innenseitig ein Kettenrad 40 angebracht ist, welches mit der Kette 56 kämmt. Durch Verdrehen der Kurbel 39 und somit dem Kettenrad 40 wird der Wagen 10 längs zu den Profilstücken 12 und 13 verschoben.

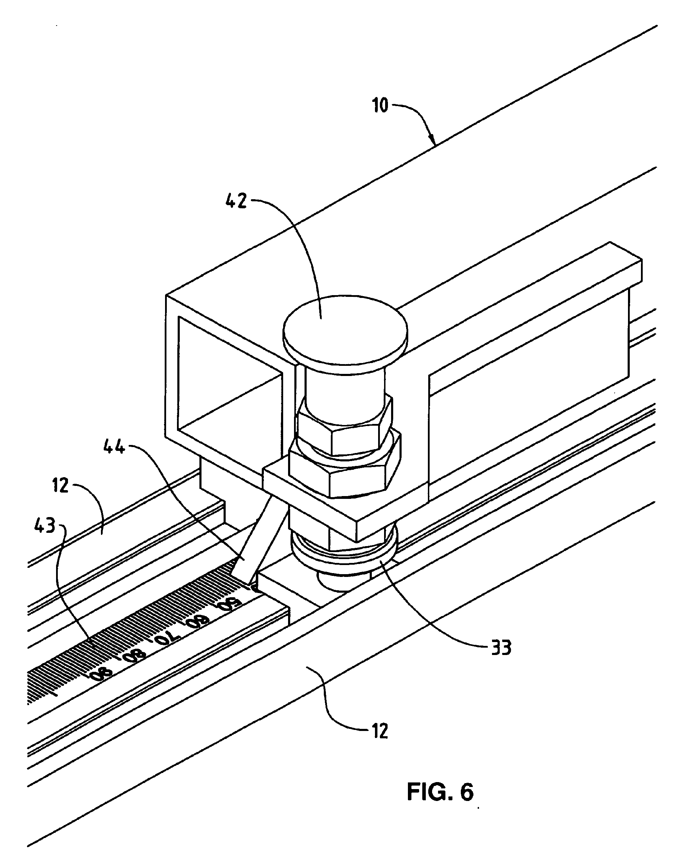

Fig. 6 zeigt ein Positionierelement 33, welches sowohl im einen Profilstück 12 als auch in der Führungsleiste 30 (Fig. 2) angebracht werden kann. Dieses Positionierelement 33 ist in der entsprechenden Führungsnut in eine beliebige Position verschiebbar und dort arretierbar. Fig. 6 zeigt die Anordnung im einen Profilstück 12, das Positionierelement 33 ist somit in einer Führungsnut 18 verschiebbar. Wie insbesondere auch aus Fig. 4 ersichtlich ist, weist dieses Positionierelement 33 eine Bohrung 41 auf, in welche ein Positionierstift 34 eindringen kann. Dieser Positionierstift 34 ist in bekannter Weise mit einem Handgriff 42 versehen, mit welchem der Positionierstift bedient werden kann. Dieser Positionierstift 34 mit dem Handgriff 42 ist jeweils am Wagen 10 bzw. am Ständer 2 angebracht. Das Positionierelement 33 kann somit in die gewünschte Position verfahren und arretiert werden, danach kann der Ständer 2 bzw. der Wagen 10 soweit verfahren werden, bis der Positionierstift 34 in die Bohrung 41 des Positionierelementes 33 eindringen kann, der Ständer 2 bzw. der Wagen 10 sind somit in einer gewünschten Lage positioniert. Diese Positionierelemente 33 können somit beim Bearbeiten von mehreren gleichen lang gestreckten Werkstücken 23 in die Positionen der anzubringenden Bohrungen gesetzt werden, das Auffinden dieser Positionen zum Anbringen der Bohrungen im lang gestreckten Werkstück kann somit in einfacher Weise erfolgen.

Wie ebenfalls insbesondere aus Fig. 6 entnehmbar ist, kann auf dem einen Profilstück 12 eine Messeinrichtung 43 angebracht werden, die beispielsweise als Massstab ausgebildet ist. Am Wagen 10 ist ein Messfühler 44 angebracht, mit welchem ersichtlich ist, an welcher Stelle der Messeinrichtung 43 sich der Wagen 10 bzw. die Bohreinrichtung befindet. Hierbei ist es vorteilhaft, wenn der Messfühler 44 mit seiner Messkante 45 mit einem gesetzten Positionierelement 33 übereinstimmt, die Positionierelemente 33 können dann auch mit Bezugnahme auf die Messeinrichtung 43 eingestellt werden.

Selbstverständlich wäre es auch denkbar, andere Messeinrichtungen zu verwenden, beispielsweise auf digitaler Basis.

Eine derartige Messeinrichtung ist auch an der Führungsleiste 30 (Fig. 2) angebracht, so dass auch der Ständer 2 auf das gewünschte Mass verfahren werden kann.

Wie bereits erwähnt worden ist, weist der Rahmen 14 ein Anschlagelement 25 auf, an welchem das zu bearbeitende lang gestreckte Werkstück 23 zur Anlage kommt (Fig. 1). In vorteilhafter Weise sind dieses Anschlagelement 25 und die Messeinrichtung 43 so aufeinander abgestimmt, dass der Nullpunkt der Messeinrichtung 43 mit dem Anschlagpunkt des lang gestreckten Werkstücks 23 am Anschlagelement 25 übereinstimmt.

In gleicher Weise ist dies auch mit der an der Führungsleiste 30 (Fig. 2) angebrachten Messeinrichtung vorgesehen, wobei als Nullpunkt der vertikale Steg 45 am zusätzlichen Profil 20 (Fig. 4) dienen kann, gegen welchen Steg 45 das zu bearbeitende lang gestreckte Werkstück 23 gespannt wird.

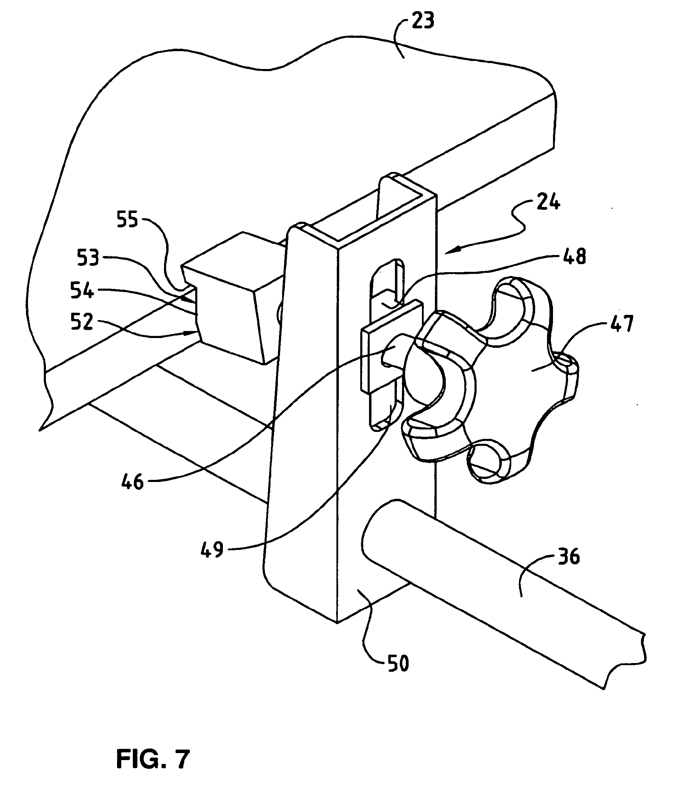

Wie aus Fig. 7 ersichtlich ist, besteht das Spannelement 24 aus einer Spannschraube 46, welche mit einem Handgriff 47 ausgestattet ist. Diese Spannschraube ist in einen Gewindestein 48 eingeschraubt, welcher in einer schlitzförmigen Ausnehmung 49 in einem Ständer 50 höhenverschiebbar gelagert ist. Dieser Ständer 50 ist, wie bereits erwähnt worden ist, entlang dem Stab 36 ebenfalls verschiebbar. Die Gewindeöffnung im Gewindestein 48 ist so ausgerichtet, dass die Spannschraube 46 gegen das einzuspannende Werkstück 23 hin gegen unten geneigt ist. Am den Werkstück 23 zugewandten Ende ist an der Spannschraube 46 ein Spannstück 51 drehbar angebracht. Die der Spannschraube 46 abgewandte Fläche 52 dieses Spannstückes 51 ist mit einer Längskerbe 53 versehen. Diese Längskerbe weist im Querschnitt gesehen einen langen Schenkel 54 und einen kurzen Schenkel 55 auf, die im Grund der Längskerbe 53 einen rechten Winkel einschliessen.

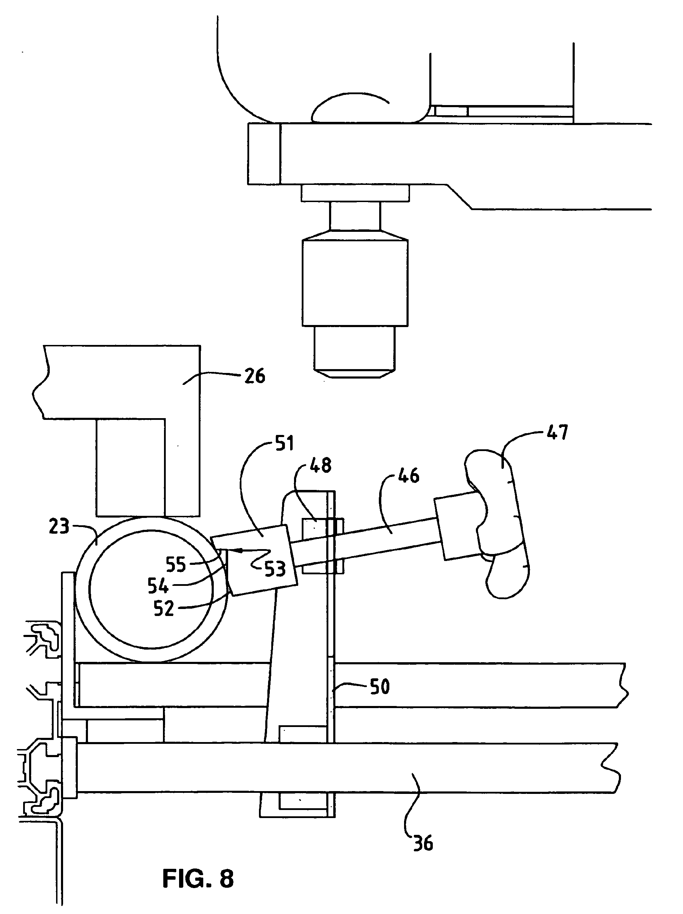

Durch diese Ausgestaltung des Spannstückes 51 können lang gestreckte Werkstücke 23 gespannt werden, die unterschiedlichste Aussenkonturen aufweisen, wie dies in den Fig. 8 bis 10 dargestellt ist.

Fig. 8 zeigt als lang gestrecktes Werkstück 23 ein rundes Rohrprofil, zum Spannen des selben wird das Spannstück 51 so gedreht, dass der kurze Schenkel 55 oben angeordnet ist, während der lange Schenkel 54 unten angeordnet ist. Durch die abgeschrägte Fläche 52 und die Längskerbe 53 wird dieses Profil somit in optimaler Weise gespannt.

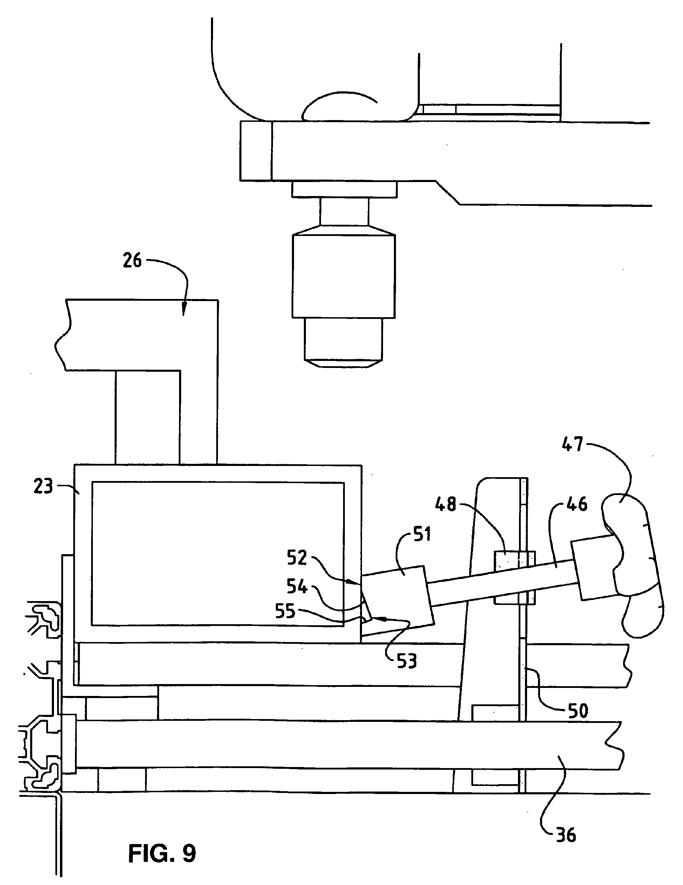

In Fig. 9 ist ein lang gestrecktes Werkstück dargestellt, das als Querschnitt ein rechteckförmiges Hohlprofil aufweist. Zum Spannen dieses Werkstücks 23 kann das Spannstück 51 so gedreht werden, dass der lange Schenkel 54 obenliegend ist, während der kurze Schenkel 55 untenliegend ist, die abgeschrägte Fläche 52 liegt somit voll auf der Seitenwandung dieses Profils auf. Wie bereits erwähnt worden ist, kann zum Verhindern des Abhebens von der Auflage dieses Werkstücks 23 das vorgängig beschriebene Niederhalteelement 26 eingesetzt werden.

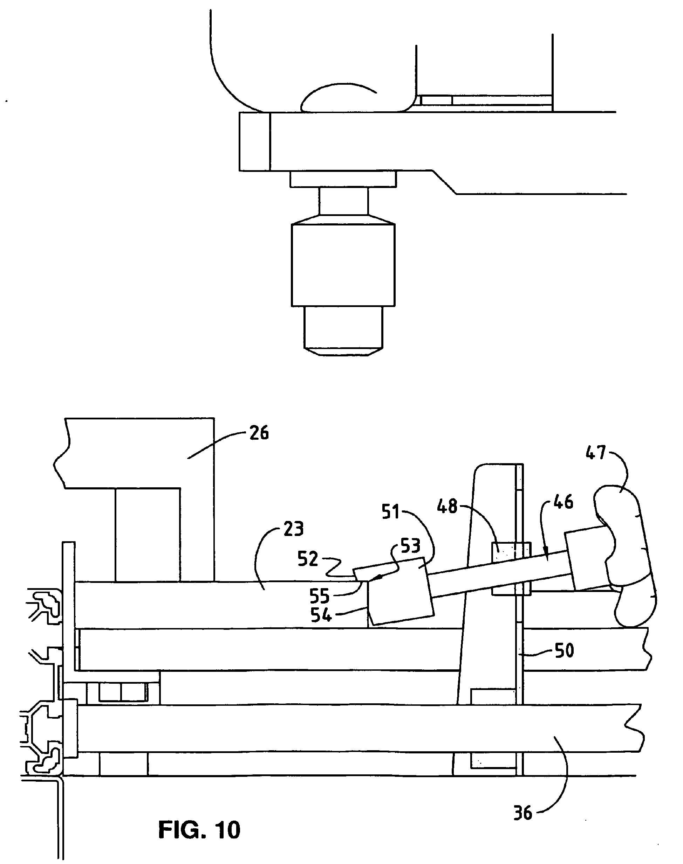

Wenn das lang gestreckte Werkstück 23 als flaches Vierkantprofil ausgebildet ist, wie dies in Fig. 10 dargestellt ist, kann das Spannstück 51 so gedreht werden, dass der kurze Schenkel 55 obenliegend ist und der lange Schenkel 54 untenliegend ist. Die entsprechende Ecke des lang gestreckten Werkstückes 23 ragt dann in die Längskerbe 53 hinein, das Werkstück 23 kann somit in optimaler Weise gespannt werden.

Diese erfindungsgemässe Vorrichtung bietet vielfältige Möglichkeiten, um in lang gestreckten Werkstücken 23 Bohrungen anzubringen. Der Aufbau dieser Einrichtung ist sehr einfach, wodurch diese kostengünstig hergestellt werden kann, auch die Handhabung ist äusserst einfach, wobei die entsprechenden zusätzlichen Hilfselemente wie Spannelemente, Niederhalteelemente, Handkurbeln und Messeinrichtung die Bedienerfreundlichkeit verbessern.

## Patentansprüche

1. Vorrichtung zum Anbringen von Bohrungen in insbesondere lang gestreckte Werkstücke (23), umfassend eine Bohreinrichtung (1), in welcher ein Bohrwerkzeug einspannbar ist, welche Bohreinrichtung (1) an einem Ständer (2) über erste Führungen (4) derart angebracht ist, dass diese parallel zur Achse des Bohrwerkzeugs verfahrbar ist, sowie eine Werkstückauflage, auf welcher das lang gestreckte Werkstück (23) aufsetzbar ist, und auf welcher das lang gestreckte Werkstück (23) bezüglich der Bohreinrichtung (1) positionierbar ist, und der Ständer (2), an welchem die Bohreinrichtung (1) angebracht ist, entlang von zweiten Führungen (8) rechtwinklig zu den ersten Führungen (4) und quer zum aufsetzbaren Werkstück (23) verfahrbar ist, welche zweiten Führungen (8) auf einem Wagen (10) befestigt sind, welcher entlang von dritten Führungen (11), die senkrecht zu den ersten Führungen (4) und zu den zweiten Führungen (8) ausgerichtet sind, und längs des aufsetzbaren lang gestreckten Werkstücks (23) verfahrbar ist, **dadurch gekennzeichnet, dass** die dritten Führungen (11) aus zwei Profilstücken (12, 13) gebildet sind, die an einem Rahmen (14) befestigt sind, in welchen Auflageelemente (22) eingesetzt sind, auf welche das lang gestreckte Werkstück (23) aufsetzbar ist, und dass zwischen die beiden Profilstücke (12, 13) Stäbe (36) einsetzbar sind, so dass die Stäbe (36) entlang der beiden Profilstücke (12, 13) unterhalb der Auflageelemente (22) verschiebbar sind, und dass an diesen Stäben (36) Spannelemente (24) angebracht sind, die längs der Stäbe (36) verschiebbar und positionierbar sind.

2. Vorrichtung nach Anspruch 1, **dadurch gekennzeichnet, dass** der Rahmen (14) rechteckförmig aus Längsholmen (15, 16) und Querholmen (17) gebildet ist und an den Längsholmen (15, 16) zusätzliche Profile (20) angebracht sind, entlang welcher die Auflageelemente (22) in beliebige Positionen verschiebbar sind.

3. Vorrichtung nach Anspruch 1 oder 2, **dadurch gekennzeichnet, dass** je eines der beiden Profilstücke (12, 13) längs eines Längsholms (15, 16) des Rahmens (14) und parallel zum anderen angebracht ist, und jedes dieser Profilstücke (12, 13) mit mehreren in Längsrichtung verlaufenden Führungsnuten (18) ausgestattet ist.

4. Vorrichtung nach Anspruch 3, **dadurch gekennzeichnet, dass** der Wagen (10) mit Führungsstücken (35) ausgestattet ist, welche in Führungsnuten (18) der Profilstücke (12, 13) für den Wagen (10) hineinragen und gleitend geführt sind.

5. Vorrichtung nach Anspruch 3 oder 4, **dadurch gekennzeichnet, dass** die Endbereiche der Stäbe (36) mit Führungsstücken (37) versehen sind, die jeweils in einer der Führungsnuten (18) geführt sind, und die Stäbe (36) entlang der Führungsnuten (18) verschiebbar sind.

6. Vorrichtung nach Anspruch 5, **dadurch gekennzeichnet, dass** jedes Spannelement (24) mit einer Spannschraube (46) ausgestattet ist, welche in einem Gewindestein (48) eingeschraubt ist, welcher Gewindestein (48) in einem auf dem Stab (36) verschiebbaren Ständer (50) höhenverschiebbar gelagert ist, und dass an dem dem aufsetzbaren Werkstück (23) zugewandten Ende drehbar ein Spannstück (51) angebracht ist, dessen der Spannschraube (46) abgewandte Fläche (52) mit einer Längskerbe (53) versehen ist, die im Querschnitt gesehen zwei verschieden lange Schenkel (54, 55 ) aufweist, die im Grund der Längskerbe (53) einen rechten Winkel einschliessen.

7. Vorrichtung nach einem der Ansprüche 3 bis 6, **dadurch gekennzeichnet, dass** am einen Endbereich des Rahmens (14) und der Profilstücke (12, 13) ein Anschlagelement (25) angebracht ist, das als Anschlag für das einsetzbare Werkstück (23) dient, dass das eine Profilstück (12) mit einer Messeinrichtung (43) ausgestattet ist, welche mit einem am Wagen (10) angebrachten Messfühler (44) zusammenwirkt, und dass der Anschlag zugleich die Nullposition für das Bohrwerkzeug entlang der dritten Führungen (11) bildet.

8. Vorrichtung nach einem der Ansprüche 3 bis 7, **dadurch gekennzeichnet, dass** entlang einer Führungsnut (18) des einen Profilstückes (12) Positionierelemente (33) verschiebbar und in beliebiger Position arretierbar sind, welche mit einer Bohrung (41) versehen sind, und dass am Wagen (10) ein Positionierstift (34) angebracht ist, der senkrecht zur Führungsnut (18) verschiebbar ist und in passender Position in die Bohrung (41) der Positionierelemente (33) eindringt.

9. Vorrichtung nach einem der Ansprüche 1 bis 8, **dadurch gekennzeichnet, dass** die zweiten Führungen (8) mit einer Führungsnut ausgestattet sind, in welcher Positionierelemente (33) verschiebbar und in beliebiger Position arretierbar sind, welche mit einer Bohrung (41) versehen sind, und dass am Ständer (2) ein Positionierstift (34) angebracht ist, der senkrecht zur Führungsnut verschiebbar ist und in passender Position in die Bohrung (41) der Positionierelemente (33) eindringt.

10. Vorrichtung nach einem der Ansprüche 3 bis 9, **dadurch gekennzeichnet, dass** entlang des einen Profilstücks (12) und parallel dazu am Rahmen (14) ein vertikaler Steg (45) angebracht ist, der als Queranschlag für das einsetzbare Werkstück (23) dient und dass die zweiten Führungen (8) mit einer Messeinrichtung (43) ausgestattet sind, welche mit einem am Ständer (2) angebrachten Messfühler (44) zusammenwirkt, und dass der Queranschlag zugleich die Nullposition für das Bohrwerkzeug entlang der zweiten Führungen (8) bildet.

11. Vorrichtung nach einem der Ansprüche 3 bis 10, **dadurch gekennzeichnet, dass** entlang einer Führungsnut (18) des einen Profilstückes (12) Niederhalteelemente (26) verschiebbar und in eine beliebige Position bringbar sind, welche Niederhalteelemente (26) aus einer vertikal angeordneten Stange (27) gebildet sind, auf welche ein Bügel (28) verschiebbar aufgesetzt ist, dessen Ende (29) auf das aufsetzbare Werkstück (23) auflegbar ist.

12. Vorrichtung nach einem der Ansprüche 1 bis 11, **dadurch gekennzeichnet, dass** die Verschiebung der Bohreinrichtung (1) entlang den ersten Führungen (4), die Verschiebung des Ständers (2) entlang den zweiten Führungen (8) und die Verschiebung des Wagens (10) entlang den dritten Führungen (11) jeweils über einen handbetätigbaren Kurbeltrieb (7; (31; 38, 39, 40) erfolgt.

## Claims

1. Device for drilling drill holes in particular in elongated workpieces (23), comprising a drilling device (1), in which a drilling tool is clampable, which drilling device (1) is installed on a stand (2) by first guides (4) in such a way that this drilling device is displaceable parallel to the axis of the drilling tool, as well as a workpiece support on which the elongated workpiece (23) is placeable, and on which the elongated workpiece (23) is positionable with respect to the drilling device (1), and the stand (2), on which the drilling device (1) is installed, is displaceable along second guides (8) orthogonally to the first guides (4) and transversely to the attachable workpiece (23), which second guides (8) are fixed to a carriage (10), which carriage is displaceable along third guides (11), which are aligned perpendicular to the first guides (4) and to the second guides (8), and along the attachable elongated workpiece (23), **characterised in that** the third guides (11) are formed by two profile sections (12, 13), which are fixed to a frame (14), in which supporting elements (22) are inserted, on which elements the elongated workpiece (23) is placeable, and **in that** rods (36) are insertable between the two profile sections (12, 13), so that the rods (36) are displaceable along the two profile sections (12, 13) underneath the supporting elements (22), and **in that** attached to these rods (36) are clamping elements (24), which are displaceable and positionable along the rods (36).

2. Device according to claim 1, **characterised in that** the frame (14) is made up in a rectangular way of longitudinal beams (15, 16) and transverse beams (17), and installed on the longitudinal beams (15, 16) are additional profiles (20), along which the supporting elements (22) are displaceable in any desired positions.

3. Device according to claim 1 or 2, **characterised in that** one each of the two profile sections (12, 13) is installed along a longitudinal beam (15, 16) of the frame (14) and parallel to the other, and each of these profile sections (12, 13) is provided with a plurality of guide slots (18) running in longitudinal direction.

4. Device according to claim 3, **characterised in that** the carriage (10) is provided with guide pieces (35), which project into guide slots (18) of the profile sections (12, 13) for the carriage (10) and are guided in a sliding way.

5. Device according to claim 3 or 4, **characterised in that** the end regions of the rods (36) are provided with guide pieces (37), which are each guided in one of the guide slots (18), and the rods (36) are displaceable along the guide slots (18).

6. Device according to claim 5, **characterised in that** each clamping element (24) is provided with a clamping screw (46), which is screwed into a threaded block (48), which threaded block (48) is borne in a way displaceable in height in a stand (50) displaceable on the rod (36), and **in that** installed in a rotatable way on the end facing the attachable workpiece (23) is a clamping piece (51), the surface (52) of which facing away from the clamping screw (46) is provided with a longitudinal notch (53), which, seen in cross section, has two arms (54, 55) of different length that enclose a right angle in the base of the longitudinal notch (53).

7. Device according to one of the claims 3 to 6, **characterised in that** installed on an end region of the frame (14) and of the profile sections (12, 13) is a stop element (25), which serves as the stop for the insertable workpiece (23), **in that** the one profile section (12) is provided with a measuring device (43), which co-operates with a sensor (44) installed on the carriage (10), and **in that** the stop forms at the same time the zero position for the drilling tool along the third guides (11).

8. Device according to one of the claims 3 to 7, **characterised in that** positioning elements (33) are displaceable and lockable in any desired position along a guide slot (18) of the one profile section (12), which positioning elements are provided with a drill hole (41), and **in that** attached to the carriage (10) is a positioning pin (34), which is perpendicularly displaceable with respect to the guide slot (18) and in suitable position penetrates the drill hole (41) of the positioning elements (33).

9. Device according to one of the claims 1 to 8, **characterised in that** the second guides (8) are provided with a guide slot in which positioning elements (33) are displaceable and lockable in any desired position, which elements are provided with a drill hole (41), and **in that** installed on the stand (2) is a locating pin (34) which is displaceable perpendicular to the guide slot and in suitable position penetrates the drill hole (41) of the positioning elements (33).

10. Device according to one of the claims 3 to 9, **characterised in that** installed along the one profile section (12) and parallel thereto on the frame (14) is a vertical crosspiece (45), which serves as transverse stop for the insertable workpiece (23), and **in that** the second guides (8) are provided with a measuring device (43), which co-operates with a sensor (44) installed on the stand (2), and **in that** the transverse stop forms at the same time the zero position for the drilling tool along the second guides (8).

11. Device according to one of the claims 3 to 10, **characterised in that** holding down elements (26) are displaceable and are able to be brought into any desired position along one guide slot (18) of the one profile section (12), which holding down elements (26) are formed by a vertically disposed rod (27), on which a holder (28) is displaceably placed whose end (29) is able to be put on the attachable workpiece (23).

12. Device according to one of the claims 1 to 11, **characterised in that** the displacement of the drilling device (1) along the first guides (4), the displacement of the stand (2) along the second guides (8) and the displacement of the carriage (10) along the third guides (11) takes place in each case via a hand-operable crank mechanism (7; (31; 38, 39, 40).

## Revendications

1. Dispositif pour réaliser des trous de perçage notamment dans des pièces à travailler (23) allongées, comprenant un dispositif de perçage (1) dans lequel un outil de perçage est susceptible d'être serré et qui est installé sur un montant (2) par des premiers guides (4) de telle manière que ledit dispositif de perçage est déplaçable parallèlement à l'axe dudit outil de perçage, ainsi qu'un support de pièce sur lequel la pièce à travailler allongée (23) est susceptible d'être placée, et sur lequel la pièce à travailler allongée (23) est susceptible d'être positionnée par rapport audit dispositif de perçage (1), et le montant (2), sur lequel ledit dispositif de perçage (1) est installé, est déplaçable le long de seconds guides (8) orthogonalement auxdits premiers guides (4) et transversalement à la pièce à travailler (23) susceptible d'être placée, lesdits seconds guides (8) étant fixés à un chariot (10) qui est déplaçable le long de troisièmes guides (11), qui sont alignés perpendiculairement auxdits premiers guides (4) et auxdits seconds guides (8), et le long de la pièce à travailler (23) allongée et susceptible d'être placée, **caractérisé en ce que** lesdits troisièmes guides (11) sont formés par deux tronçons de profilé (12, 13) qui sont fixés à un cadre (14) dans lequel des éléments de support (22) sont insérés, sur lesquels ladite pièce à travailler allongée (23) est susceptible d'être placée, et **en ce que** des bâtons (36) sont susceptibles d'être insérés entre lesdits deux tronçons de profilé (12, 13) de manière à ce que lesdits bâtons (36) soient déplaçables le long desdits deux tronçons de profilé (12, 13) au-dessous desdits éléments de support (22), et **en ce que** des éléments de serrage (24) susceptibles d'être déplacés et positionnés le long desdits bâtons (36) sont attachés auxdits bâtons (36).

2. Dispositif selon la revendication 1, **caractérisé en ce que** ledit cadre (14) est réalisé de manière rectangulaire avec des barres longitudinales (15, 16) et des barres transversales (17), et que, sur lesdites barres longitudinales (15, 16), des profilés supplémentaires (20) sont installés, le long desquels lesdits éléments de support (22) sont déplaçables dans n'importe quelles positions désirées.

3. Dispositif selon la revendication 1 ou 2, **caractérisé en ce que** l'un respectivement desdits deux tronçons de profilé (12, 13) est installé le long d'une barre longitudinale (15, 16) dudit cadre (14) et parallèlement à l'autre, et que chacun desdits tronçons de profilé (12, 13) est pourvu d'une pluralité de fentes de guidage (18) s'étendant dans la direction longitudinale.

4. Dispositif selon la revendication 3, **caractérisé en ce que** ledit chariot (10) est pourvu de pièces de guidage (35) qui font saillie dans des fentes de guidage (18) desdits tronçons de profilé (12, 13) pour ledit chariot (10) et sont guidées de manière glissante.

5. Dispositif selon les revendications 3 ou 4, **caractérisé en ce que** les régions d'extrémité desdits bâtons (36) sont pourvues de pièces de guidage (37) dont chacune est guidée dans l'une des fentes de guidage (18), et lesdits bâtons (36) sont déplaçables le long les fentes de guidage (18).

6. Dispositif selon la revendication 5, **caractérisé en ce que** chaque élément de serrage (24) est pourvu d'une vis de serrage (46) qui est vissée dans un bloc fileté (48) qui repose d'une manière déplaçable en hauteur dans un montant (50) déplaçable sur ledit bâton (36), et **en ce que**, sur l'extrémité tournée vers la pièce (23) susceptible d'être placée et d'une manière rotative, une pièce de serrage (51) est installée, dont la surface (52) détournée de ladite vis de serrage (46) est pourvue d'une encoche longitudinale (53) qui, vue en section transversale, a deux bras de longueurs différentes (54, 55) qui renferment un angle droit dans la base de ladite encoche longitudinale (53).

7. Dispositif selon l'une des revendications 3 à 6, **caractérisé en ce que**, sur une région d'extrémité dudit cadre (14) et desdits tronçons de profilé (12, 13), un élément de butée (25) est installé qui sert de butée pour la pièce (23) susceptible d'être insérée, **en ce que** l'un (12) desdits tronçons de profilé est pourvu d'un dispositif de mesure (43) qui coopère avec un capteur (44) installé sur ledit chariot (10), et **en ce que** ladite butée constitue en même temps la position zéro pour l'outil de perçage le long desdits troisièmes guides (11).

8. Dispositif selon l'une des revendications 3 à 7, **caractérisé en ce que** des éléments de positionnement (33) sont déplaçables et verrouillables à n'importe quelle position désirée le long d'une fente de guidage (18) de l'un (12) desdits tronçons de profilé, lesdits éléments de positionnement étant pourvus d'un trou de perçage (41), et **en ce que**, audit chariot (10), une broche (un ergot) de positionnement (34) est installée, qui est déplaçable perpendiculairement par rapport à ladite fente de guidage (18) et, en position appropriée, pénètre le trou de perçage (41) desdits éléments de positionnement (33).

9. Dispositif selon l'une des revendications 1 à 8, **caractérisé en ce que** lesdits seconds guides (8) sont pourvus d'une fente de guidage dans laquelle des éléments de positionnement (33) sont déplaçables et verrouillables à n'importe quelle position désirée, lesdits éléments de positionnement étant pourvus d'un trou de perçage (41), et **en ce que**, audit montant (2), une broche (un ergot) de positionnement (34) est installée, qui est déplaçable perpendiculairement par rapport à ladite fente de guidage (18) et, en position appropriée, pénètre le trou de perçage (41) desdits éléments de positionnement (33).

10. Dispositif selon l'une des revendications 3 à 9, **caractérisé en ce que**, le long de l'un (2) desdits tronçons de profilé et parallèlement à ce dernier sur ledit cadre (14), une traverse verticale (45) est installée, qui sert de butée transversale pour la pièce (23) susceptible d'être insérée, et **en ce que** lesdits seconds guides (8) sont pourvus d'un dispositif de mesure (43), qui coopère avec un capteur (44) installé sur ledit montant (2), et **en ce que** ladite butée transversale constitue en même temps la position zéro pour l'outil de perçage le long desdits seconds guides (8).

11. Dispositif selon l'une des revendications 3 à 10, **caractérisé en ce que** des éléments de retenue (26) sont déplaçables et susceptibles d'être amenés dans n'importe quelle position désirée le long d'une fente de guidage (18) de l'un (12) desdits tronçons de profilé, lesdits éléments de retenue (26) étant formés par une tige (27) arrangée verticalement, sur laquelle un support (28) est placé de manière déplaçable et dont l'extrémité (29) est susceptible d'être placée sur la pièce (23) susceptible d'être attachée.

12. Dispositif selon l'une des revendications 1 à 11, **caractérisé en ce que** le déplacement dudit dispositif de perçage (1) le long desdits premiers guides (4), le déplacement dudit montant (2) le long desdits seconds guides (8) et le déplacement dudit chariot (10) le long desdits troisièmes guides (11 ) s'effectue respectivement via un mécanisme de manivelle à commande manuelle (7; (31; 38, 39, 40).
